# EUROPEAN PATENT APPLICATION

(11) **EP 2 571 282 A2**
(43) Date of publication of application: **20.03.2013**
(21) Application number: 12184532.5
(22) Date of filing: 14.09.2012
(51) Int. Cl.: H04N 21/442, H04N 21/45, H04N 21/4402, H04N 21/485, H04N 21/81

(54) **Associating executable macros with content by recording user input events**

(30) Priority: 14.09.2011 US 201113232829
(71) Applicant: Eldon Technology Limited, Steeton, Keighley BD20 6QW (GB)
(72) Inventor: Mountain, Dale Llewelyn, Keighley, Yorkshire BD20 ODQ (GB)
(74) Representative: Reeve, Nicholas Edward

(57) **Abstract**

A content player presents content and determines to record an associated macro. The content player detects inputs and includes the inputs along with corresponding times in the macro. When the content player subsequently provides access to the content, the content player executes the macro, executing the inputs at the corresponding times. In some cases, a number of the inputs may be associated with a single operation and the operation may be recorded instead of the individual inputs. In some cases, the content player may record an input unless a prior indication is received specifying not to include the next input. In other cases, the content player may only record an input if a prior indication is received specifying to include the next input. In one or more implementations, the content player may provide access to one or more recorded macros so that the macros may be edited.

## Description

### FIELD OF THE INVENTION

This disclosure relates generally to playing content, and more specifically to recording user input for content as macros.

### SUMMARY

The present disclosure discloses systems and methods for associating macro user input events with content. A content player may provide access to an instance of content (which may be stored and/or being stored while being received from one of more content providers). The content player may determine to record a macro associated with the instance of content and may detect one or more user inputs and record a macro includes the detected user inputs along with the corresponding times that the user inputs were detected. When the content player subsequently provides access to the instance of content, the content player may determine to execute the macro and may execute the included user inputs at the time during the subsequent presentation of content corresponding to the originally detected time.

Such user inputs may include one or more "fast forward" commands, one or more "rewind" commands, one or more "stop" commands, one or more "pause" command, one or more volume change commands, one or more display adjustment commands, one or more commands to alter operation of a component connected to the content player, and/or any other user input that may be received during presentation of the at least one instance of content. In some cases, a number of the detected user inputs may be associated with a single operation and the content player may record the operation in the macro instead of the number of individual user inputs.

In various implementations, the content player may not record all detected inputs in the macro. In some cases, the content player may record a detected user input in the macro unless an indication is received prior to that user input that specifies not to include the next user input in the macro. In other cases, the content player may only record a detected user input in the macro if an indication is received prior to that user input that specifies to include the next user input in the macro.

In one or more implementations, the content player may provide access to one or more macros that have been recorded so that the macros may be edited. Such access may be provided via one or more interfaces that detail instructions included in the respective macro and may include controls that a user may select to add user inputs to the macro, remove user inputs from the macro, and/or alter existing user inputs included in the macro.

In a first aspect, the invention provides a method for associating macro user input events with content, the method comprising: providing access to an instance of content utilizing a content player; determining, utilizing the content player, to record a macro associated with the instance of content; and recording, utilizing the content player, the macro associated with the instance of content including a user input detected during access to the instance of content corresponding to the time of the instance of content that the user input was detected.

The operation of determining, utilizing the content player, to record a macro associated with the instance of content may further comprise determining to record the macro associated with the instance of content based on a received indication to record the macro or based on a configuration setting.

The method may further comprise: providing a subsequent access to the instance of content utilizing the content player; determining, utilizing the content player, to execute the macro associated with the instance of content; and executing the macro associated with the instance of content, utilizing the content player during the subsequent access such that the included user input is executed at the time of the instance of content that the user input was detected.

The operation of determining, utilizing the content player, to execute the macro associated with the at least one instance of content may further comprise determining to execute the macro associated with the instance of content based on a received indication to execute the macro associated with the instance of content or a configuration setting. The user input may comprise one of a fast forward command, a rewind command, a stop command, a one pause command, a volume change command, a display adjustment command, or a command to alter operation of a component connected to the content player.

The user input may comprise a plurality of user inputs and the plurality of user inputs may include a set of inputs that are associated with a single operation, and said operation of recording, utilizing the content player, the macro associated with the instance of content including a user input detected during the access to the instance of content corresponding to the time of the instance of content that the user input was detected may further comprise including the single operation in the macro instead of the set of inputs.

The operation of providing access to an instance of content utilizing a content player may further comprise: providing access to the instance of content from a non-transitory storage medium of the content player; or providing access to the instance of content as it is being received and stored by the content player in the non-transitory storage medium.

The method may further comprise at least one of: detecting the user input during the access to the instance of content after receiving an indication to record the next input in the macro; or omitting an input during the access to the instance of content from the macro after receiving an indication to omit a subsequent input from the macro.

The method may further comprise receiving the user input from a user interface of the content player or an electronic device associated with the content player.

The method may further comprise: providing access, utilizing the content player, to the macro; receiving, utilizing the content player, an alteration to the macro; and altering the macro, utilizing the content player, based on the alteration.

In a second aspect the invention provides a system for associating macro user input events with content, comprising: at least one content player that provides access to at least one instance of content, the at least one content player comprising: at least one communication component; and at least one processing unit; wherein the at least one processing unit determines to record at least one macro associated with the at least one instance of content and records the at least one macro associated with the at least one instance of content including at least one user input detected during the access to the at least one instance of content utilizing the at least one communication component corresponding to at least one time of the at least one instance of content that the at least one user input was detected.

The at least one processing unit may provide access to the at least one macro, receives at least one alteration to the at least one macro via the at least one communication component, and alters the at least one macro based at least on the at least one alteration.

The at least one communication component may detect the at least one user input by at least one of receiving the at least one user input from at least one of at least one user or at least one electronic device associated with the at least one content player.

The at least one processing unit may perform at least one of detecting the at least one user input during the access to the at least one instance of content after receiving at least one indication to record at least one next input in the at least one macro utilizing the at least one communication component or omitting at least one input during the access to the at least one instance of content from the at least one macro after receiving at least one indication to omit at least one subsequent input from the at least one macro utilizing the at least one communication component.

The at least one content player may further comprise at least one non-transitory storage medium and wherein the at least one processing unit provides access to the at least one instance of content by at least one of providing access to the at least one instance of content from the at least one non-transitory storage medium or providing access to the at least one instance of content as it is being received via the at least one communication component and stored in the at least one non-transitory storage medium.

The at least one user input may comprise a plurality of user inputs and the plurality of user inputs include at least one set of inputs that are associated with a single operation and the at least one processing unit includes the single operation in the at least one macro instead of the at least one set of inputs.

The at least one user input may comprises at least one of at least one fast forward command, at least one rewind command, at least one stop command, at least one pause command, at least one volume change command, at least one display adjustment command, or at least one command to alter operation of a component connected to the at least one content player.

The at least one processing unit may provide at least one subsequent access to the at least one instance of content, determines to execute the at least one macro associated with the at least one instance of content, and executes the at least one macro associated with the at least one instance of content during the at least one subsequent access such that the at least one processing unit executes the included at least one user input at the at least one time of the at least one instance of content that the at least one user input was detected.

The at least one content player may further comprise at least one non-transitory storage medium and wherein the at least one processing unit determines to execute the at least one macro associated with the at least one instance of content based at least on at least one indication to execute the at least one macro associated with the at least one instance of content received via the at least one communication component or at least one configuration setting stored in the at least one non-transitory storage medium.

The at least one content player may further comprises at least one non-transitory storage medium and wherein the at least one processing unit determines to record at least one macro associated with the at least one instance of content based at least on at least one indication to record the at least one macro received via the at least one communication component or based on at least one configuration setting stored in the at least one non-transitory storage medium.

It is to be understood that both the foregoing general description and the following detailed description are for purposes of example and explanation and do not necessarily limit the present disclosure. The accompanying drawings, which are incorporated in and constitute a part of the specification, illustrate subject matter of the disclosure. Together, the descriptions and the drawings serve to explain the principles of the disclosure.

### BRIEF DESCRIPTION OF THE DRAWINGS

Figure 1 is a block diagram illustrating a system for associating macro user input events with content.
Figure 2 is a flow chart illustrating a method for associating macro user input events with content. This method may be performed by the system of Figure 1.
Figures 3A-3I are diagrams illustrating a user using a system for associating macro user input events with content. The system may be the system of Figure 1.

### DETAILED DESCRIPTION OF THE EMBODIMENTS

The description that follows includes sample systems, methods, and computer program products that embody various elements of the present disclosure. However, it should be understood that the described disclosure may be practiced in a variety of forms in addition to those described herein.

Content players (such as set top boxes, television receivers, digital video recorders, mobile computers, cellular telephones, smart phones, tablet computers, desktop computers, and so on) may transmit stored content and/or content received from one or more programming providers (such as satellite television programming providers, cable television programming providers, Internet service providers, video on demand providers, pay-per-view movie providers, digital music providers, and so on) via one of more communication connections (such as satellite communication connections, coaxial cable communication connections, Internet communication connections, radio-frequency connections, and so on) (which may also be stored for later transmittal) to one or more presentation devices. Such content may include one or more television programs, movies, on demand videos, digital music, and/or any other kind of content that may be presented by a content player.

When such a content player presents content, the content player may modify how content is presented based on user input. Such user input may specify to skip to a later portion of the content, return to previous portions of the content, pause or stop presentation of the content, alter volume of one of more audio portions of the content, alter display properties of one or more video portions of the content, control other components connected to the content player utilized in presenting the content (such as an interconnected surround sound system), and/or otherwise modify presentation of the content. In this way, a user may be able to control how the content is presented in order to accommodate personal preferences.

However, being required to enter input in order to control presentation of the content as desired by a user may be burdensome to the user. For example, a user may enter inputs during the presentation of a television program in order to skip commercials. In order to skip such commercials, the user may be required to enter an input corresponding to a "fast forward" function at the start of a commercial and then enter an input corresponding to a "play" function at the end of the commercial. If the user does not time the inputs correctly, the user may be presented with portions of the commercial that the user intended to skip or may accidentally skip portions of the television program. Further, the user may be required to devote attention to the start and stop of commercials and/or entering input instead of merely enjoying the television program. This may detract from the user's enjoyment of the television program.

Moreover, the television program may be presented to the user on more than one occasion. The user may wish to control presentation of the television program during a subsequent presentation in the same way as a previous presentation, such as by skipping the commercials. Despite having entered input to control presentation of the program on a previous occasion, the user may be required to enter the exact same inputs over again in order to have the television program presented as desired. Such repetition of the user's effort may frustrate the user.

The present disclosure discloses systems and methods for associating macro user input events with content. A content player may provide access to an instance of content. The content player may determine to record a macro associated with the instance of content. Such a macro may be a set of instructions to perform at particular times during presentation of the instance of content. The content player may detect one or more user inputs during presentation of the instance of content and may record a macro associated with the instance of content that includes the detected user inputs and the corresponding times during presentation that the user inputs were detected.

When the content player subsequently provides access to the instance of content, the content player may determine to execute the macro associated with the instance of content. In executing the macro associated with the instance of content, the content player may execute the included user inputs at the time during the subsequent presentation of content corresponding to the time that the user inputs were originally detected during recording of the macro. In this way, a user may be able to control how the instance of content is presented while only having to enter inputs once no matter how many times the content is presented.

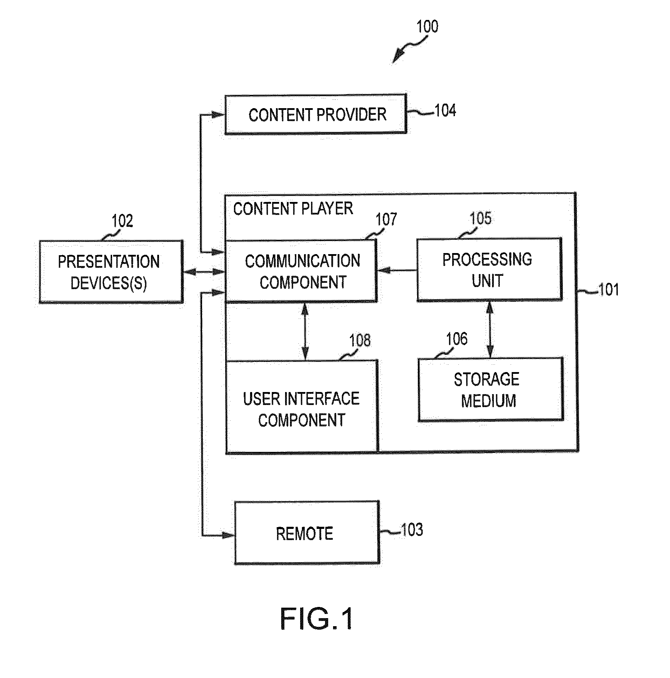

Figure 1 is a block diagram illustrating a system 100 for associating macro user input events with content. The system 100 includes a content player 101 and one or more presentation devices 102. The content player may be any kind of content player, such as a set top box, a television receiver, a digital video recorder, a mobile computer, a cellular telephone, a smart phone, a tablet computer, a desktop computer, and/or any other kind of electronic device that plays content. The presentation device may be any kind of presentation device, such as a television, a computer monitor, a cathode ray tube display, a liquid crystal display, a plasma screen display, a speaker, a printer, and/or any other kind of device that presents content played by the content player.

The content player may include one or more processing units 105, one or more non-transitory storage media 106 (which may take the form of, but is not limited to, a magnetic storage medium; optical storage medium; magneto-optical storage medium; read only memory; random access memory; erasable programmable memory; flash memory; and so on), one or more communication components, and/or one or more user interface components 108. The processing unit may execute instructions stored in the non-transitory storage medium to present content stored in the non-transitory storage medium on the presentation device 102 via the communication component 102. The processing unit may perform such operations in response to user input received via the user interface component and/or from one or more remote controls 103 via the communication component.

In some implementations, the content player 101 may also communicate with one or more content providers 104 via the communication component 107. In such implementations, the content player may receive content from the content provider. The content player may present the content being received from the content provider on the presentation device 102 via the communication device 107 and/or may store such content in the non-transitory storage medium.

When the processing unit 105 provides access to an instance of content (whether stored in the non-transitory storage medium 106 and/or being received via the communication component 107 and stored in the non-transitory storage medium), the processing unit may determine to record a macro (which may be a set of instructions to perform at particular times during presentation of the instance of content) associated with the instance of content. In some cases, the processing unit may determine to record the macro in response to one or more user inputs received from the user interface component 108 and/or the remote control 103 via the communication component. In other cases, the processing unit may determine to record the macro based on one or more user preference settings and/or default settings stored in the non- transitory storage medium. When the processing unit determines to record the macro, the processing unit may detect one or more user inputs received during presentation of the instance content from the user interface component and/or the remote control via the communication component. The processing unit may include such user inputs in the macro and the times during presentation of the instance of content that the user inputs were detected. In some case, the macro may be recorded in the non-transitory storage medium as part of the instance of content. In other cases, the macro may be recorded separately from the instance of content in the non-transitory storage medium and may be associated with the instance of content.

Subsequently, when the processing unit 105 provides access to the instance of content, the processing unit may determine to execute the macro. In some cases, the processing unit may determine to execute the macro based on one or more user inputs received from the user interface component 108 and/or the remote control 103 via the communication component 107. In other cases, the processing unit may determine to execute the macro based on one or more user preference settings and/or default settings stored in the non-transitory storage medium 106. When executing the macro, the processing unit may execute the included user inputs at the time during the subsequent presentation of content that corresponds to the time that the user inputs were originally detected during recording of the macro.

The user inputs included in the macro may include any user inputs that may be received from the user interface component 108 and/or the remote control 103 via the communication component 107 during presentation of the instance of content. For example, the user inputs may include one or more "fast forward" commands, one or more "rewind" commands, one or more "stop" commands, one or more "pause" command, one or more volume change commands, one or more display adjustment commands (such as commands to alter brightness, contrast, and/or any other display property), one or more commands to alter operation of a component connected to the content player 101 (such as an interrelated surround sound system or other such interrelated component), and/or any other user input that may be received during presentation of the at least one instance of content.

In some cases, a number of the user inputs may be associated with a single operation. For example, a user may press a "fast forward" button on the remote 103 in order to select a particular "fast forward" speed. In some cases, a first press of the button may "fast forward" the instance of content as a two times normal speed whereas a second press may "fast forward" the instance of content at a four times normal speed and a third press may "fast forward" the instance of content at a six times normal speed. In such a case, despite the fact that multiple separate user inputs may be detected, the operation that is associated with the multiple user inputs may be included in the macro instead of the separate user inputs. For example, when a user inputs three presses of the "fast forward" button, a six times normal speed "fast forward" operation may be included in the macro corresponding to the time of the third button press as opposed to the individual presses of the button.

In various implementations, the processing unit 105 may not include all user inputs detected during presentation of the instance of content in the macro. For example, in one or more implementations, the processing unit may receive a user input (such as selection of a special "ignore next input" button on the remote 103) indicating to not include the next input in the macro. This may allow a user to control a particular aspect of the presentation of the instance of content that the user may not want performed every time that the macro is executed. In an example situation, the processing unit may be recording a macro while presenting a movie. The user may have entered inputs to lower an associated volume during commercials and to return the volume to normal when the movie resumes. Further, an inordinate amount of background noise may be present while the user is watching part of the movie. As a result, the user may need to substantially increase the volume to hear over the background noise, but may not wish this particular volume change to be included in the macro because the background noise may not likely be present any other time the user watches the movie. As a result, the user may enter an input indicating to omit the next user input from the macro and then enter inputs to alter the volume as appropriate. In this way, the user can alter how the movie is presented at this time without ruining the rest of the macro that has already been prepared.

By way of another example, in one or more other implementations, the processing unit 105 may only include detected user inputs in the macro if those user inputs follow a user input such as selection of a special "include next input" button on the remote 103) indicating to include the next input in the macro. This may allow a user to directly specify which user inputs are included in the macro. In an example situation, the processing unit may be recording a macro while presenting a television program. The user may be able to enter any desired inputs to control this particular presentation without concern as to whether or not the user wants the respective input included in the macro. When the user wants a particular user input included in the macro, the user may simply enter an input indicating to include the next user input in the macro. For example, the television program may include a number of sequences that are excessively dark and the user may only want to include user inputs relating to changing the brightness or contrast of video for the particular sequences. As such, the user may enter whatever other inputs the user desires to customize the presentation without concern for the macro. When the user enters inputs to change the brightness or contrast of video for the particular sequences, the user may first enter the input indicating to include the next input in the macro. In this way, the macro does not include the user inputs that the user did not specifically indicate to include.

In some implementations, the processing unit 105 may be configured to provide a user access to one or more macros that have been recorded and associated with one or more instances of content so that the user may edit the macros. In this way the user may be able to alter the macros without having to access the respective instance of content and/or record an entirely new macro. In such implementations, the processing unit 105 may present one or more interfaces that detail instructions included in the respective macro and may include controls that a user may select to add user inputs to the macro, remove user inputs from the macro, and/or alter existing user inputs included in the macro. Such interfaces may illustrate the include user inputs graphically, in a text-based fashion, and/or any other fashion that enables the user to interact with the particular macro. In some cases, the interface may include samples of the respective instance of content so that the user may be able to understand the affect of particular user inputs and/or what portions of the respective instance of content to which user inputs relate.

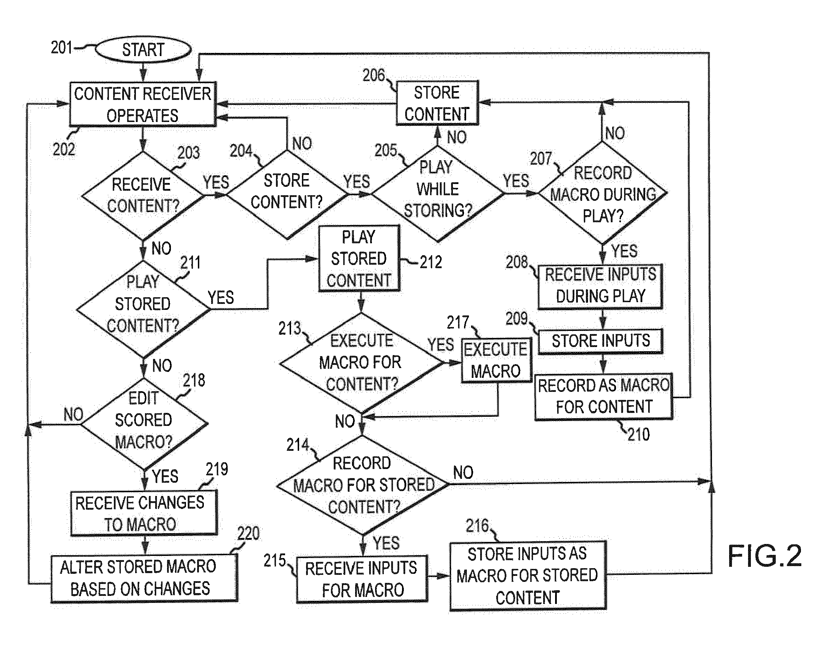

Figure 2 illustrates a method 200 for associating macro user input events with content. The method 200 may be performed by the content player 101 of Figure 1. The flow begins at block 201 and proceeds to block 202 where the content player 101 operates. The flow then proceeds to block 203 where the processing unit 05 determines whether or not an instance of content is being received via the communication component 107. If so, the flow proceeds to block 204. Otherwise, the flow proceeds to block 211.

At block 204, after the processing unit 105 determines that an instance of content is being received, the processing unit determines whether or not to store the instance of content that is being received. This determination may be based on one or more received user inputs, one or more user preference or default settings, one or more recording timers, and so on. If the processing unit determines to store the instance of content that is being received, the flow proceeds to block 205. Otherwise, the flow returns to block 202 where the content player 101 continues to operate.

At block 205, after the processing unit 105 determines to record the instance of content that is being received, the processing unit determines whether or not to play the instance of content while storing. This determination may be based on one or more received user inputs, one or more user preference or default settings, and so on. If not, the flow proceeds to block 206 where the processing unit stores the instance of content that is being received in the non- transitory storage medium 106 before the flow returns to block 202 where the content player 101 continues to operate. Otherwise, the flow proceeds to block 207.

At block 207, after the processing unit 105 determines to play the instance of content while storing, the processing unit determines whether or not to record a macro for the instance of content while playing the instance of content. This determination may be based on one or more received user inputs, one or more user preference or default settings, and so on. If not, the flow proceeds to block 206 where the processing unit stores the instance of content that is being received in the non-transitory storage medium 106. Otherwise, the flow proceeds to block 208.

At block 208, after the processing unit 105 determines to record a macro for the instance of content, the processing unit receives one or more user inputs during play of the instance of content. The flow then proceeds to block 209 where the processing unit stores the received user inputs and the flow proceeds to block 210. At block 210, the processing unit records the stored user inputs as a macro associated with the instance of content in the non-transitory storage medium 106. The flow then returns to block 202 where the content player 101 continues to operate.

At block 211, after the processing unit 105 determines that an instance of content is not being received via the communication component 107, the processing unit determines whether or not to play an instance of content stored in the non-transitory storage medium 106. This determination may be based on one or more received user inputs and so on. If so, the flow proceeds to block 212. Otherwise, the flow proceeds to block 218.

At block 212, after the processing unit determines to play an instance of content stored in the non-transitory storage medium 106, the processing unit plays the instance of stored content and the flow proceeds to block 213. At block 213, the processing unit determines whether or not to execute a macro associated with the instance of stored content. This determination may be based on one or more received user inputs, one or more user preference or default settings, and so on. If so, the flow proceeds to block 217 where the processing unit executes the macro before the flow proceeds to block 214. Otherwise, the flow proceeds directly to block 214.

At block 214, the processing unit 105 determines whether or not to record a macro for the instance of content while playing the instance of stored content. This determination may be based on one or more received user inputs, one or more user preference or default settings, and so on. If not, the flow returns to block 202 where the content player 101 continues to operate. Otherwise, the flow proceeds to block 215.

At block 215, after the processing unit 105 determines to record a macro for the instance of stored content, the processing unit receives one or more user inputs to include in the macro. The flow then proceeds to block 216 where the processing unit records the received user inputs as a macro associated with the instance of stored content in the non-transitory storage medium 106. The flow then returns to block 202 where the content player 101 continues to operate.

At block 218, after the processing unit 105 determines not to play an instance of content stored in the non-transitory storage medium 106, the processing unit determines whether or not to edit a macro stored in the non-transitory storage medium. This determination may be based on one or more received user inputs and so on. If not, the flow returns to block 202 where the content player 101 continues to operate. Otherwise, the flow proceeds to block 219.

At block 219, after the processing unit 105 determines to edit a macro stored in the non- transitory storage medium 106, the processing unit receives one or more changes to the macro and the flow proceeds to block 220. At block 220, the processing unit alters the macro based on the received changes and the flow returns to block 202 where the content player 101 continues to operate.

Although the method 200 is illustrated and described above as including particular operations in a particular order, it is understood that other arrangements of different operations in different orders are possible without departing from the scope of the present disclosure. For example, operations 208 through 210 describe recording of the macro as being performed after the user inputs have been received and stored. However, in various implementations the macro may be recorded as user inputs continue to be received. As such, it is understood that the particular operations and arrangement of operations illustrated and described with respect to the method 200 are for the purposes of illustration.

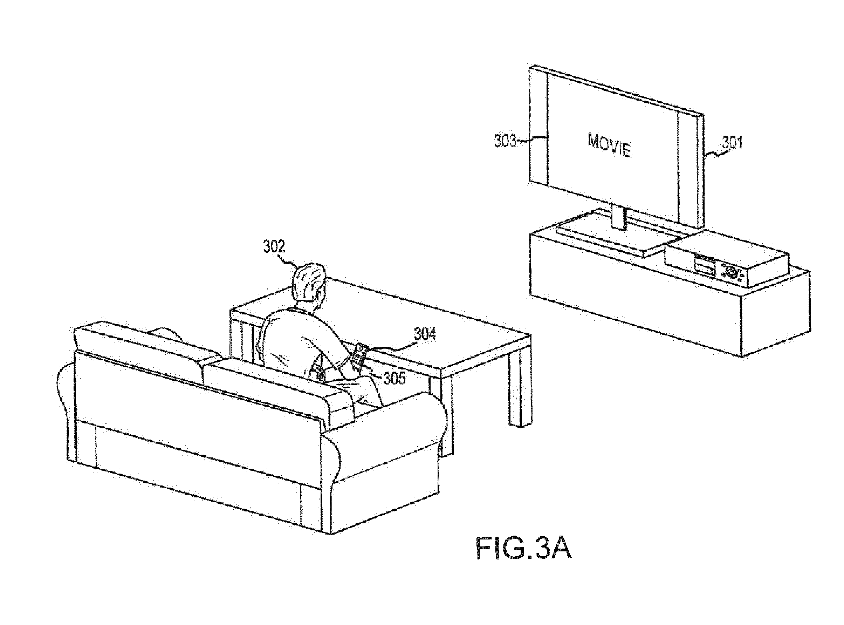

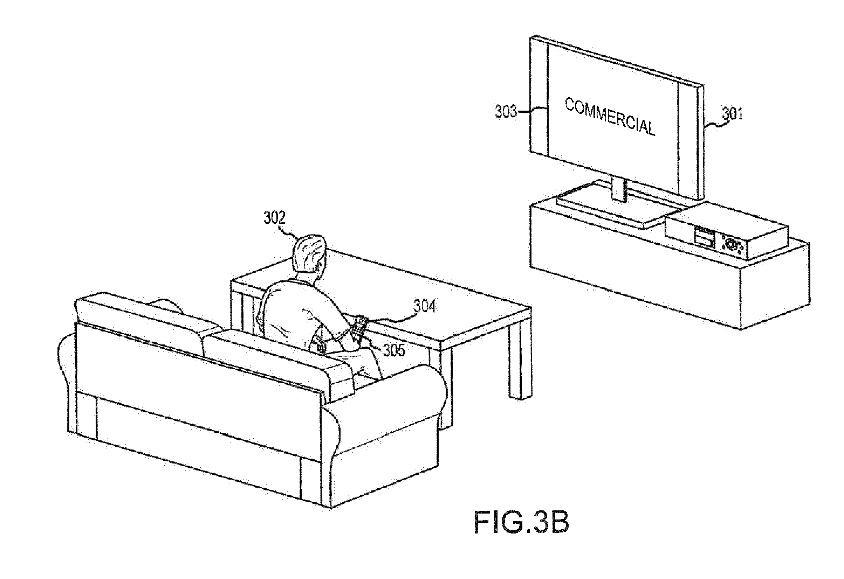

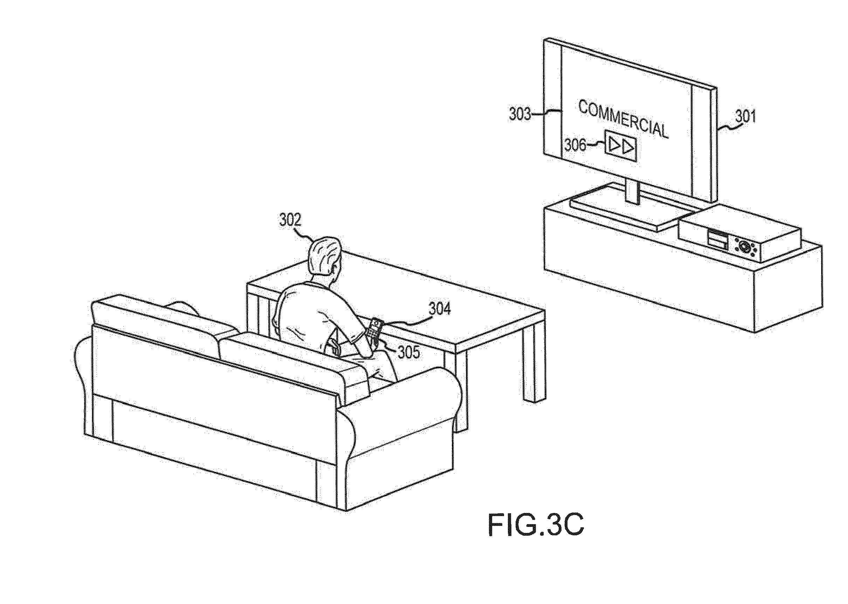

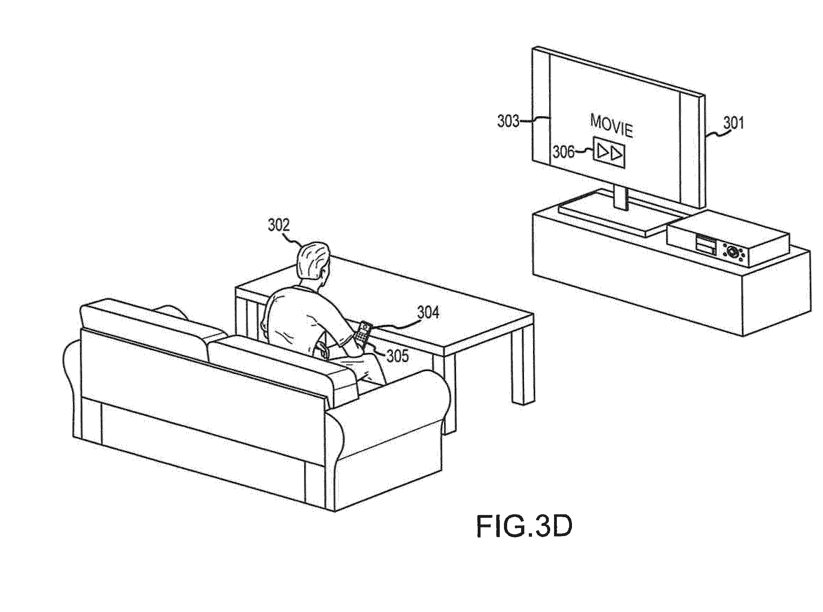

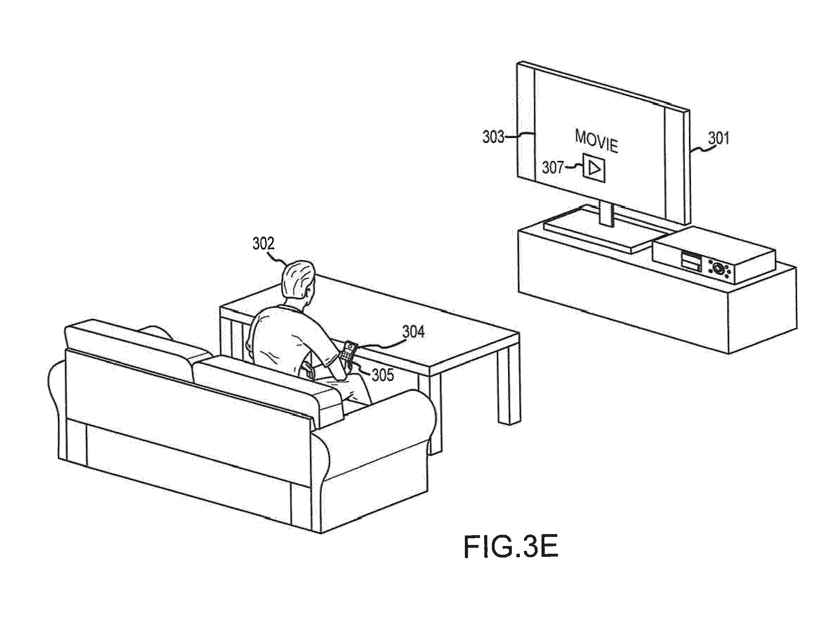

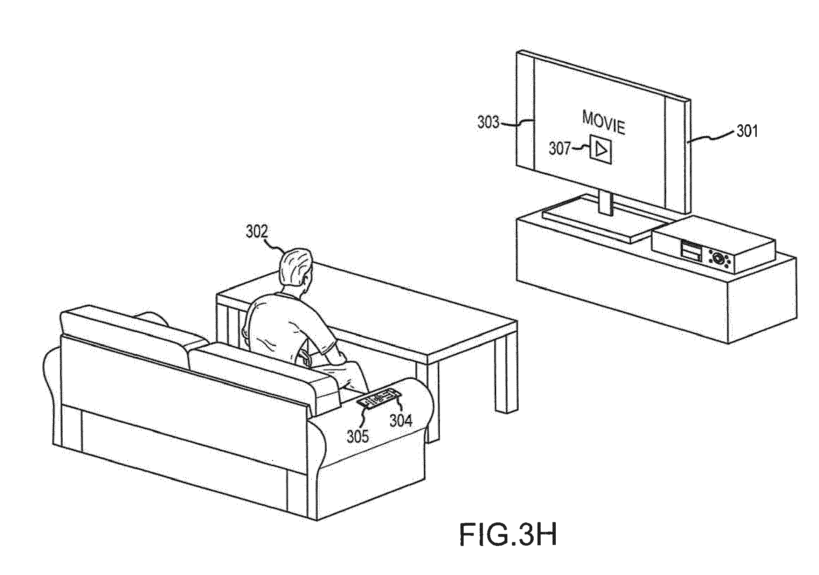

Figures 3A-3I are diagrams illustrating a user 302 using an example system for associating macro user input events with content. The system may be the system of Figure 1. As illustrated in Figure 3A, the user 302 is watching an instance of content that includes a movie on the screen 303 of a television 301. In this example, the television has determined to record a macro associated with the movie. As shown in Figure 3B, the instance of content includes a commercial. Upon noticing the commercial, the user enters an input corresponding to a "fast forward" operation utilizing one or more buttons 305 of a remote 304. Figure 3C illustrates a "fast forward" indicator on the screen indicating that the user has entered the input corresponding to the "fast forward" operation. As shown in Figure 3D, upon the completion of the commercial, the movie resumes. Upon noticing the resuming of the movie, the user enters an input corresponding to a "play" operation utilizing one or more buttons of the remote. Figure 3E illustrates a "play" indicator on the screen indicating that the user has entered the input corresponding to the "play" operation. Upon completion of the movie, the television may then record these user inputs as a macro associated with the movie.

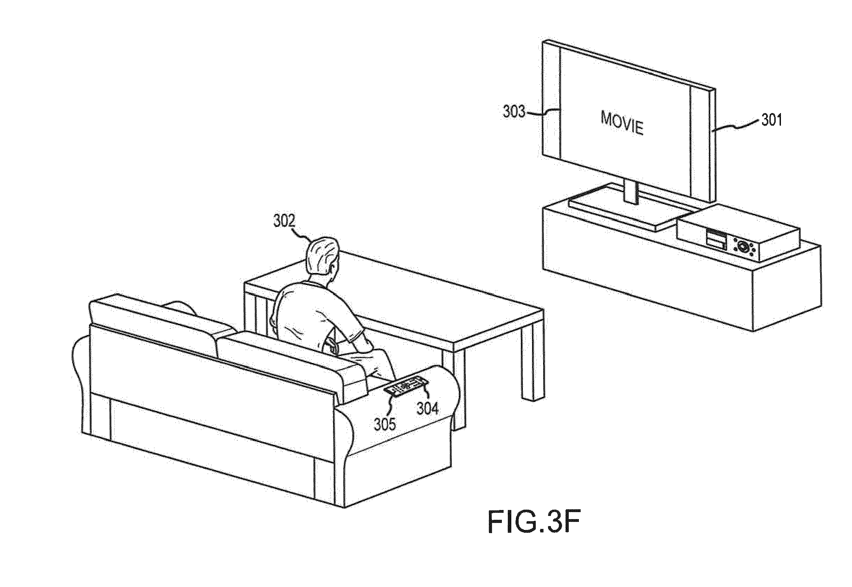

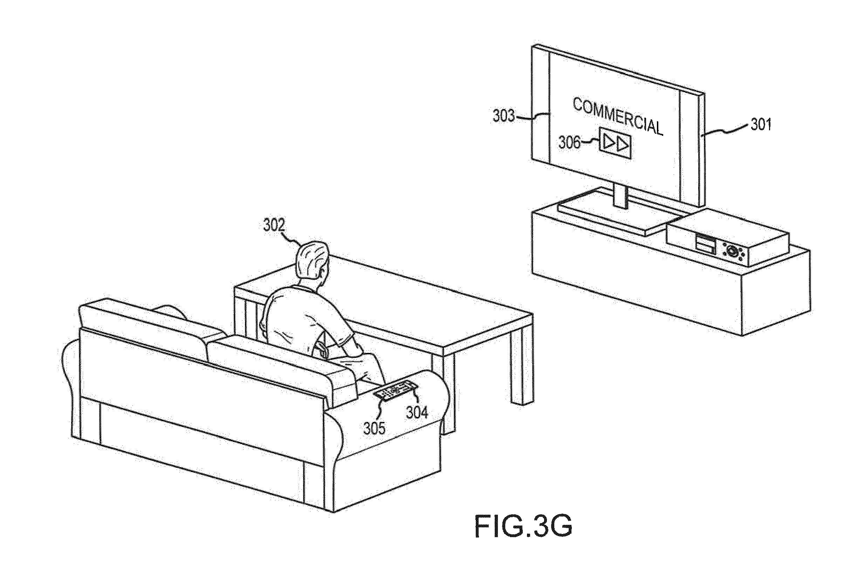

Figure 3F depicts the user 302 subsequently watching the move on the screen 303 of the television 301 after the macro has been recorded. In this example, the television automatically executes the stored macro when the user accesses the movie. Figures 3G through 3H illustrate the execution of the macro. As shown, even though the user is not utilizing the remote 304, the television automatically performs the "fast forward" and "play" operations in order to skip through the commercial.

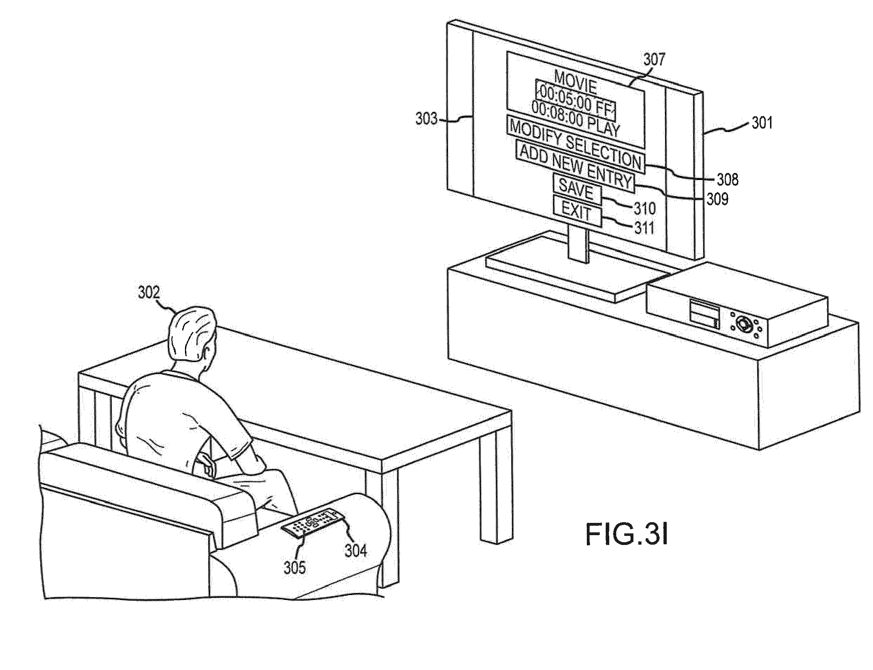

Figure 3I depicts an interface that enables the user 302 to edit the stored macro. As illustrated, the interface lists the user inputs 307 included in the macro. The user may select one or more of the user inputs included in the list and modify that user input utilizing a "modify selection" button 308. The user may also add a new user input to the list utilizing a "new entry" button 309, save the altered macro utilizing a "save" button 310, and/or exit the interface utilizing an "exit" button 311.

In the present disclosure, the methods disclosed may be implemented as sets of instructions or software readable by a device. Further, it is understood that the specific order or hierarchy of steps in the methods disclosed are examples of sample approaches. In other embodiments, the specific order or hierarchy of steps in the method can be rearranged while remaining within the disclosed subject matter. The accompanying method claims present elements of the various steps in a sample order, and are not necessarily meant to be limited to the specific order or hierarchy presented.

The described disclosure may be provided as a computer program product, or software, that may include a non-transitory machine-readable medium having stored thereon instructions, which may be used to program a computer system (or other electronic devices) to perform a process according to the present disclosure. A non-transitory machine-readable medium includes any mechanism for storing information in a form (e.g., software, processing application) readable by a machine (e.g., a computer). The non-transitory machine-readable medium may take the form of, but is not limited to, a magnetic storage medium (e.g., floppy diskette, video cassette, and so on); optical storage medium (e.g., CD-ROM); magneto-optical storage medium; read only memory (ROM); random access memory (RAM); erasable programmable memory (e.g., EPROM and EEPROM); flash memory; and so on.

It is believed that the present disclosure and many of its attendant advantages will be understood by the foregoing description, and it will be apparent that various changes may be made in the form, construction and arrangement of the components without departing from the disclosed subject matter or without sacrificing all of its material advantages. The form described is merely explanatory, and it is the intention of the following claims to encompass and include such changes.

While the present disclosure has been described with reference to various embodiments, it will be understood that these embodiments are illustrative and that the scope of the disclosure is not limited to them. Many variations, modifications, additions, and improvements are possible. More generally, embodiments in accordance with the present disclosure have been described in the context or particular embodiments. Functionality may be separated or combined in blocks differently in various embodiments of the disclosure or described with different terminology. These and other variations, modifications, additions, and improvements may fall within the scope of the disclosure as defined in the claims that follow.

## Claims

1. A method for associating macro user input events with content, the method comprising:
providing access to at least one instance of content utilizing at least one content player;
determining, utilizing the at least one content player, to record at least one macro associated with the at least one instance of content; and
recording, utilizing the at least one content player, the at least one macro associated with the at least one instance of content including at least one user input detected during the access to the at least one instance of content corresponding to at least one time of the at least one instance of content that the at least one user input was detected.

2. The method of claim 1, wherein said operation of determining, utilizing the at least one content player, to record at least one macro associated with the at least one instance of content further comprises determining to record the at least one macro associated with the at least one instance of content based at least on at least one a received indication to record the at least one macro or based on at least one configuration setting.

3. The method of claim 1 or 2, further comprising:
providing at least one subsequent access to the at least one instance of content utilizing the at least one content player;
determining, utilizing the at least one content player, to execute the at least one macro associated with the at least one instance of content; and
executing the at least one macro associated with the at least one instance of content, utilizing the at least one content player during the at least one subsequent access such that the included at least one user input is executed at the at least one time of the at least one instance of content that the at least one user input was detected.

4. The method of claim 3, wherein said operation of determining, utilizing the at least one content player, to execute the at least one macro associated with the at least one instance of content further comprises determining to execute the at least one macro associated with the at least one instance of content based at least on at least one received indication to execute the at least one macro associated with the at least one instance of content or at least one configuration setting.

5. The method of any preceding claim, wherein the at least one user input comprises at least one of at least one fast forward command, at least one rewind command, at least one stop command, at least one pause command, at least one volume change command, at least one display adjustment command, or at least one command to alter operation of a component connected to the at least one content player.

6. The method of any preceding claim, wherein:
the at least one user input comprises a plurality of user inputs and the plurality of user inputs include at least one set of inputs that are associated with a single operation, and
said operation of recording, utilizing the at least one content player, the at least one macro associated with the at least one instance of content including at least one user input detected during the access to the at least one instance of content corresponding to at least one time of the at least one instance of content that the at least one user input was detected further comprises including the single operation in the at least one macro instead of the at least one set of inputs.

7. The method of any preceding claim, wherein said operation of providing access to at least one instance of content utilizing at least one content player further comprises at least one of:
providing access to the at least one instance of content from at least one non-transitory storage medium of the at least one content player; or
providing access to the at least one instance of content as it is being received and stored by the at least one content player in the at least one non-transitory storage medium.

8. The method of any preceding claim, further comprising at least one of:
detecting the at least one user input during the access to the at least one instance of content after receiving at least one indication to record at least one next input in the at least one macro; or
omitting at least one input during the access to the at least one instance of content from the at least one macro after receiving at least one indication to omit at least one subsequent input from the at least one macro.

9. The method of any preceding claim, further comprising receiving the at least one user input from at least one of at least one user interface of the at least one content player or at least one electronic device associated with the at least one content player.

10. The method of any preceding claim, further comprising:
providing access, utilizing the at least one content player, to the at least one macro;
receiving, utilizing the at least one content player, at least one alteration to the at least one macro; and
altering the at least one macro, utilizing the at least one content player, based at least on the at least one alteration.

11. A system for associating macro user input events with content, comprising:
at least one content player that provides access to at least one instance of content, the at least one content player comprising:
at least one communication component; and at least one processing unit;
wherein the at least one processing unit determines to record at least one macro associated with the at least one instance of content and records the at least one macro associated with the at least one instance of content including at least one user input detected during the access to the at least one instance of content utilizing the at least one communication component corresponding to at least one time of the at least one instance of content that the at least one user input was detected.

12. The system of claim 11, wherein the at least one processing unit provides access to the at least one macro, receives at least one alteration to the at least one macro via the at least one communication component, and alters the at least one macro based at least on the at least one alteration.

13. The system of claim 11 or 12, wherein the at least one communication component detects the at least one user input by at least one of receiving the at least one user input from at least one of at least one user or at least one electronic device associated with the at least one content player.

14. The system of claim 11, 12 or 13, wherein the at least one processing unit performs at least one of detecting the at least one user input during the access to the at least one instance of content after receiving at least one indication to record at least one next input in the at least one macro utilizing the at least one communication component or omitting at least one input during the access to the at least one instance of content from the at least one macro after receiving at least one indication to omit at least one subsequent input from the at least one macro utilizing the at least one communication component.

15. The system of any of claims 11 to 14, wherein at least one content player further comprises at least one non-transitory storage medium and wherein the at least one processing unit provides access to the at least one instance of content by at least one of providing access to the at least one instance of content from the at least one non-transitory storage medium or providing access to the at least one instance of content as it is being received via the at least one communication component and stored in the at least one non-transitory storage medium.
